# EUROPÄISCHE PATENTANMELDUNG

(11) **EP 1 002 967 A2**
(43) Veröffentlichungstag der Anmeldung: **24.05.2000**
(21) Anmeldenummer: 99123047.5
(22) Anmeldetag: 19.11.1999
(51) Int. Cl.: F16D 57/04, F16D 65/72

(54) **Bremsanlage mit einem hydrodynamischen Retarder, insbesondere für ein Kraftfahrzeug**

(30) Priorität: 21.11.1998 DE 19853830
(71) Anmelder: Voith Turbo GmbH & Co. KG, 89522 Heidenheim (DE)
(72) Erfinder: Vogelsang, Klaus, 74564 Crailsheim (DE)
(74) Vertreter: Dr. Weitzel & Partner

(57) **Zusammenfassung**

Die Erfindung betrifft eine Bremsanlage
mit einem hydrodynamischen Retarder (1), der einen Rotor und einen Stator aufweist, die ihrerseits einen Arbeitsraum miteinander bilden;
mit einer Kühleinrichtung (2) zum Kühlen des Arbeitsmediums;
mit einem Vorratsbehälter (3) zur Aufnahme des Arbeitsmediums;
mit einer Steuereinrichtung zum Aufbringen eines Druckes auf das im Vorratsbehälter (3) enthaltene Arbeitsmediums zwecks Einstellens des Füllungsgrades des Arbeitsraumes;
Retarder (1) und Kühleinrichtung (2) werden im Bremsbetrieb im Sinne eines Kreislaufes (5) vom Arbeitsmedium durchströmt;
gekennzeichnet durch die folgenden Merkmale:
das gesamte, im Vorratsbehälter (3) enthaltende Arbeitsmedium wird zur Wärmeabfuhr in den Kreislauf (5) eingebracht, wobei der Vorratsbehälter (3) als Bestandteil des Kreislaufes (5) durchströmt wird.

## Beschreibung

Die Erfindung betrifft eine Bremsanlage mit einem hydrodynamischen Retarder. auf den Oberbegriff von Anspruch 1 wird verwiesen.

Solche Bremsanlagen sind aus einer Vielzahl von Veröffentlichungen bekanntgeworden. Nur beispielsweise wird verwiesen auf
(1) DE 37 13 580 C1
(2) DE-AS 1 946 167
(3) US 4 726 255
(4) US 3 720 372
(5) EP 95120514.5
(6) DE 39 40 825 A1

Retarder werden bei schweren Fahrzeugen vor allem eingesetzt, um die insbesondere bei Bremsung aus hoher Fahrgeschwindigkeit (Anpassungsbremsung) anfallende kinetische Bremsenergie aufzunehmen und in Wärme umzusetzen, aber auch für geforderte Dauerbremsleistungen sind Retarder gut geeignet, beispielsweise bei einer konstanten Geschwindigkeit von 30 km/h und bei einem Gefälle von 7 %. Als Betriebsflüssigkeit dient in der Regel Öl. Die im Retarder an die Betriebsflüssigkeit übergegangene Wärme muß mittels eines speziellen Wärmetauschers dem Kühlmittel oder der Umgebungsluft zugeführt werden.

Eines von zahlreichen Problemen solcher Bremsanlagen besteht in der Abfuhr der Wärme, die der Retarder im Bremsbetrieb erzeugt. Die im Kreislauf aufgenommene und darin eingeschlossene Ölmenge ist verhältnismäßig gering. Die Aufheizung dieser Ölmenge beim Bremsbetrieb geht daher rasch vonstatten. Die Kühleinrichtung, umfassend einen Wärmetauscher und ein Gebläse, haben wegen der räumlichen Beschränkungen bei Kraftfahrzeugen auch nur eine begrenzte Kühlkapazität. Selbst wenn der Retarder aus hydrodynamischer Sicht eine höhere Bremsleistung aufbringen könnte, so sind dem jedoch durch die genannten Gegebenheiten Grenzen gesetzt.

Der Erfindung liegt die Aufgabe zugrunde, eine Bremsanlage der beschriebenen Art derart zu gestalten, daß die Kühlkapazität und damit die zeitlich verfügbare Bremsleistung gegenüber bekannten Bremsanlagen gesteigert werden kann, ohne daß das Bauvolumen der Anlage vergrößert wird.

Diese Aufgabe wird durch die Merkmale von Anspruch 1 gelöst.

Der Erfinder hat folgendes erkannt:
Das im Vorratsbehälter befindliche Arbeitsmedium wird nicht in optimaler Weise genutzt. Beim Bremsen wird zwar ein Teil des im Vorratsbehälter befindlichen Arbeitsmediums in den genannten Kreislauf überführt - im allgemeinen dadurch, daß auf den im Vorratsbehälter befindlichen Arbeitsmediumspiegel Druckluft aus einer Steuereinrichtung aufgebracht wird. Es verbleibt jedoch noch eine gewisse Ölmenge auch während des Bremsbetriebs im Vorratsbehälter. Diese Ölmenge kann je nach Betriebszustand 50 % der Gesamtölmenge betragen, die in der Bremsanlage enthalten ist.

Um auch die im Vorratsbehälter verbleibende Menge des Arbeitsmediums zur Lösung des Wärmeproblems nutzbar zu machen, schlägt der Erfinder vor, den Vorratsbehälter in den Kreislauf zu integrieren. Der Vorratsbehälter wird somit in den Kreislauf geschaltet. Dabei behält die Steuereinrichtung nach wie vor ihre Funktion bei: Sie erlaubt es, den Füllungsgrad des Retarders willkürlich je nach Bedarf an Bremsleistung einzustellen. Gleichzeitig wird aber auch diejenige Menge des Arbeitsmediums, die nicht am Bremsprozeß unmittelbar teilnimmt, zur Aufnahme von Bremswärme herangezogen.

Das praktische Ergebnis besteht darin, daß sich das Arbeitsmedium aufgrund der nunmehr größeren, aktiven Menge langsamer erhitzt. Die praktischen Auswirkungen hiervon sind die folgenden: Durch die Erfindung ist es wahlweise möglich, gegenüber vorbekannten Bremsanlagen in einer bestimmten Zeitspanne eine höhere Bremsarbeit abzurufen, oder bei gleich großer Bremsarbeit wie seither die Kühleinrichtung auf eine geringere Kühlkapazität zu dimensionieren.

Zur Umsetzung der Erfindung in die Praxis gibt es mehrere Möglichkeiten. So kann der Vorratsbehälter beispielsweise dem Retarder vorgeschaltet werden. Es ist aber auch möglich, den Vorratsbehälter dem Retarder nachzuschalten, d.h. ihn zwischen Retarder und Kühleinrichtung zu legen. Dies hat den Vorteil, daß in diesem Leitungszweig die Temperatur des Arbeitsmediums (im allgemeinen Öl) besonders hoch ist, und damit auch der angestrebte Effekt.

Die Erfindung ist anhand der Zeichnung näher erläutert. Darin ist im einzelnen folgendes dargestellt:

Fig. 1 zeigt einen erfindungsgemäßen Kreislauf.

Die Figuren 2, 3 und 4 sind erfindungsgemäße Ausführungsformen des Arbeitsmittel-Vorratsbehälters.

Fig. 5 zeigt schematisch eine Bremsanlage gemäß dem Stande der Technik.

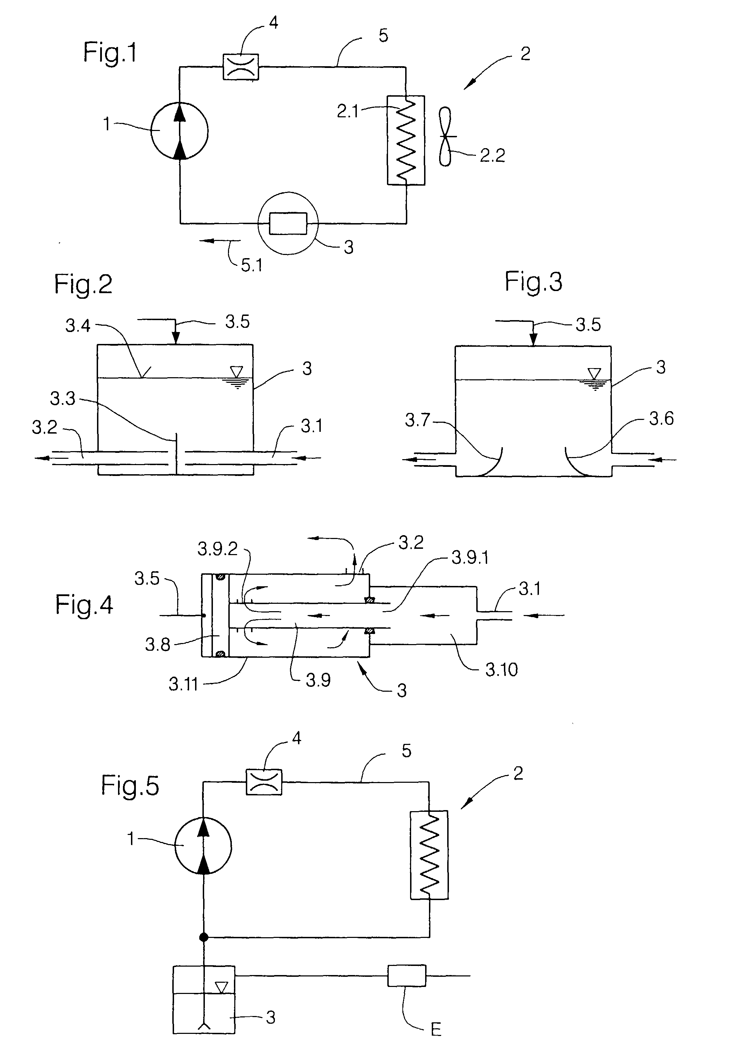

Die in Fig. 1 gezeigte Bremsanlage umfaßt einen hydrodynamischen Retarder 1, eine Kühleinrichtung 2, umfassend einen Wärmetauscher 2.1 und einen Lüfter 2.2, ferner einen Öl-Vorratsbehälter 3 sowie eine Drossel 4. Alle diese Aggregate sind in ein Leitungssystem 5 eingebunden. Es versteht sich, daß der Kreislauf noch weitere Aggregate umfassen kann, die hier nicht dargestellt sind, beispielsweise eine Pumpe, einen Thermostaten, usw..

Die Strömungsrichtung ist durch den Pfeil 5.1 angedeutet. Dabei ist der Öl-Vorratsbehälter 3 dem Retarder 1 vorgeschaltet. Er könnte ihm auch nachgeschaltet sein.

Fig. 2 läßt wiederum einen Vorratsbehälter 3 erkennen. Dieser weist einen Zulauf 3.1 sowie einen Auslauf 3.2 auf. Im Vorratsbehälter 3 befindet sich ein Wehr 3.3. Dieses vermeidet einen Kurzschluß zwischen dem Zulauf 3.1 und dem Auslauf 3.2. Man erkennt den Spiegel 3.4 des Öls. Der Vorratsbehälter 3 weist einen Anschluß 3.5 auf, mittels welchem der Spiegel 3.4 mit Druckluft aus einer hier nicht dargestellten Steuereinrichtung beaufschlagbar ist. Hiermit wird der Füllungsgrad des Retarders 1 gesteuert.

Dadurch, daß der Vorratsbehälter 3 in den Kreislauf geschaltet ist, so wie in Fig. 1 dargestellt, wird die gesamte, im Vorratsbehälter 3 enthaltene Ölmenge über kurz oder lang durch die Leitung 5 hindurchgeführt. Sie ist somit in ihrer Gesamtheit zur Aufnahme von Arbeitswärme des Retarders 1 verfügbar.

Bei der Ausführungsform des Vorratsbehälters gemäß Fig. 3 sind statt des Wehres 3.3 Leitbleche 3.6, 3.7 vorgesehen, die eine positive Verwirbelung des im Vorratsbehälter 3 enthaltenen Öles bewirken und auch Ölmengen in sonst "toten Winkeln" erfassen. Im übrigen ist der Vorratsbehälter 3 gemäß Fig. 3 gleich dem Vorratsbehälter 3 in Fig. 2.

Fig. 4 zeigt eine besonders interessante Ausführungsform eines Öl-Vorratsbehälters. In diesem Falle ist der Vorratsbehälter 3 funktional als Zylinder gestaltet, der einen Kolben 3.8 mit Kolbenstange 3.9 umschließt.

Der Vorratsbehälter 3 umfaßt hierbei einen Vorbehälter 3.10 und einen Hauptbehälter 3.11. Die Kolbenstange 3.9 ist hohl. Sie hat einen Einlaß 3.9.1 sowie eine Mehrzahl von Auslässen 3.9.2. Der Einlaß befindet sich im Bereich des Vorbehälters 3.10, und die Auslässe befinden sich im Bereich des Kolbens 3.8. Der Kolben 3.8 mit der Kolbenstange 3.9 ist im Zylinder 3.11 verschiebbar und dabei in O-Ring-Dichtungen gelagert.

Beim Betrieb gelangt das Arbeitsöl durch den Zulauf 3.1 in den Vorbehälter 3.10. Es strömt sodann durch den Einlaß 3.9.1 in den Innenraum der Kolbenstange 3.9, tritt durch die Öffnungen 3.9.2 in den Hauptbehälter 3.11 ein und verläßt diesen durch den Auslauf 3.2.

Der Hauptbehälter 3.11 weist wiederum einen Anschluß 3.5 für ein Steuerdruckmedium auf. Je nach Druck des Steuermediums wird der Kolben 3.8 mit Kolbenstange 3.9 in eine bestimmte Position relativ zum Vorratsbehälter 3 eingestellt und damit der Füllungsgrad des Retarders 1.

Diese Ausführungsform garantiert, daß keinerlei tote Ecken verbleiben, in welchen sich über längere Zeiträume hinweg Restöl aufhalten kann. Vielmehr wird die gesamte Ölmenge thermisch aktiviert und zur Aufnahme von Arbeitswärme des Retarders ausgenutzt.

Im Gegensatz zu der in den Figuren 1 bis 4 veranschaulichten Erfindung ist bei der Bremseinrichtung gemäß Fig. 5 der Vorratsbehälter 3 nicht in den Kreislauf eingebunden und somit nicht in Reihe geschaltet mit dem Retarder 1 und der Kühleinrichtung 2. Der Ölbehälter ist daher gerade beim Bremsen vom Kreislauf abgekoppelt. Er hat zwar einen Teil seines Inhaltes an den Kreislauf 5 abgegeben. Jedoch verbleibt eine Menge Restlöls, das keine Arbeitswärme vom Retarder aufnehmen und daher auch nicht an dem thermischen Prozeß teilnehmen kann.

## Patentansprüche

1. Bremsanlage
1.1 mit einem hydrodynamischen Retarder (1), der einen Rotor und einen Stator aufweist, die ihrerseits einen Arbeitsraum miteinander bilden;
1.2 mit einer Kühleinrichtung (2) zum Kühlen des Arbeitsmediums;
1.3 mit einem Vorratsbehälter (3) zur Aufnahme des Arbeitsmediums;
1.4 mit einer Steuereinrichtung zum Aufbringen eines Druckes auf das im Vorratsbehälter (3) enthaltene Arbeitsmediums zwecks Einstellens des Füllungsgrades des Arbeitsraumes;
1.5 Retarder (1) und Kühleinrichtung (2) werden im Bremsbetrieb im Sinne eines Kreislaufes (5) vom Arbeitsmedium durchströmt; gekennzeichnet durch die folgenden Merkmale:
1.6 das gesamte, im Vorratsbehälter (3) enthaltende Arbeitsmedium wird zur Wärmeabfuhr in den Kreislauf (5) eingebracht, wobei der Vorratsbehälter (3) als Bestandteil des Kreislaufes (5) durchströmt wird.

2. Bremsanlage nach Anspruch 1, dadurch gekennzeichnet, daß der Vorratsbehälter (3) mit dem Retarder (1) und der Kühleinrichtung (2) in Reihe geschaltet ist.

3. Bremsanlage nach Anspruch 1 oder 2, dadurch gekennzeichnet, daß der Vorratsbehälter (3) dem Retarder (1) in Strömungsrichtung nachgeschaltet ist.

4. Bremsanlage nach einem der Ansprüche 1 bis 3, dadurch gekennzeichnet, daß zwischen Zulauf (3.1) und Auslauf (3.2) des Vorratsbehälters (3) Strömungsverwirbelungselemente (3.3, 3.6, 3.7) vorgesehen sind.

5. Bremsanlage nach einem der Ansprüche 1 bis 4, gekennzeichnet durch die folgenden Merkmale:
5.1 der Vorratsbehälter (3) ist als Zylinder (3.10, 3.11) ausgebildet;
5.2 der Vorratsbehälter (3.10, 3.11) umschließt einen Kolben (3.8) mit Kolbenstange (3.9), die im Zylinder in dessen Axialrichtung verschiebbar sind;
5.3 die Kolbenstange (3.9) ist hohl und weist an ihrem freien Ende einen Einlaß (3.9.1) sowie im Bereich des Kolbens (3.8) Auslässe (3.9.2) auf;
5.4 der Auslauf (3.2) aus dem Vorratsbehälter (3.11) ist auf der einen Seite des Kolbens (3.8), und ein Anschluß (3.5) für ein Steuermedium auf der anderen Seite des Kolbens (3.8) angeordnet.
